# EUROPÄISCHE PATENTSCHRIFT

(11) **EP 3 758 876 B1**
(45) Veröffentlichungstag und Bekanntmachung des Hinweises auf die Patenterteilung: **03.11.2021**
(21) Anmeldenummer: 18766224.2
(22) Anmeldetag: 06.09.2018
(51) Int. Cl.: B23F 19/10, B23F 21/00

(54) **ANFASWERKZEUG, ANFASSYSTEM, VERZAHNUNGSMASCHINE UND VERFAHREN ZUM ANFASEN VON VERZAHNUNGEN**
CHAMFERING TOOL, CHAMFERING SYSTEM, GEAR-CUTTING MACHINE AND METHOD FOR CHAMFERING TOOTHINGS
OUTIL DE CHANFREINAGE, SYSTÈME DE CHANFREINAGE, MACHINE À TAILLER DES DENTURES ET PROCÉDÉ SERVANT À CHANFREINER DES DENTURES

(30) Priorität: 26.02.2018 DE 102018001477
(43) Veröffentlichungstag der Anmeldung: 06.01.2021
(73) Patentinhaber: GLEASON-PFAUTER MASCHINENFABRIK GMBH, 71636 Ludwigsburg (DE)
(72) Erfinder: SCHMEZER, Ralf, 71634 Ludwigsburg (DE)
(74) Vertreter: Leinweber & Zimmermann
(86) Internationale Anmeldenummer: PCT/EP2018/074054
(87) Internationale Veröffentlichungsnummer: WO 2019/161942

(56) Entgegenhaltungen:
- CN-U- 202 087 903
- DE-A1- 10 230 148
- DE-A1-102011 118 312
- DE-U1- 20 320 294
- JP-A- S5 531 571
- KR-A- 20130 110 673
- US-A- 1 578 589

## Beschreibung

Die Erfindung betrifft ein Anfaswerkzeug zum Anfasen von Werkstückverzahnungen gemäß dem Oberbegriff des unabhängigen Anspruchs 1 sowie ein Anfassystem aus zwei oder mehreren derartigen Anfaswerkzeugen, eine Verzahnungsmaschine mit einer Hauptbearbeitungsstation zur Erzeugung einer Werkstückverzahnung in spanender Bearbeitung und mit einem derartigen Anfassystem, und ein damit ausgeführtes Verfahren zum Anfasen von Verzahnungen. Ein derartiges Anfaswerkeug ist aus dem Dokument US 1 578 589 A bekannt.

Bekannterweise entstehen bei der spanenden Herstellung von Verzahnungen an den endseitigen Zahnkanten Grate, die aus diversen Gründen zu beseitigen sind. Zudem reicht es für zahlreiche Anwendungsfälle nicht aus, nur den Grat zu beseitigen. Denn bei ansonsten unbearbeiteter Zahnkante bestünde die Gefahr, dass letztere beim nachfolgenden Härten der Verzahnung durch Überkohlung glashart wird und dann unter Belastung ausbricht. Aus diesen Gründen soll die Zahnkante in eine Fase gearbeitet werden, wozu zahlreiche Techniken entwickelt wurden.

Eine heutzutage vielfach genutzte Technik besteht in einer plastischen Umformung der Zahnkante in eine Fase, bei der Material des Werkstücks im Bereich der Zahnkante durch ein damit im Zahneingriff abwälzendes Anfasrad verdrängt wird, wie etwa in der EP 1 270 127 A1 offenbart. Das verdrängte Material wird dann geeignet beseitigt, beispielsweise wie in der DE 10 2009 018 405 A1 beschrieben.

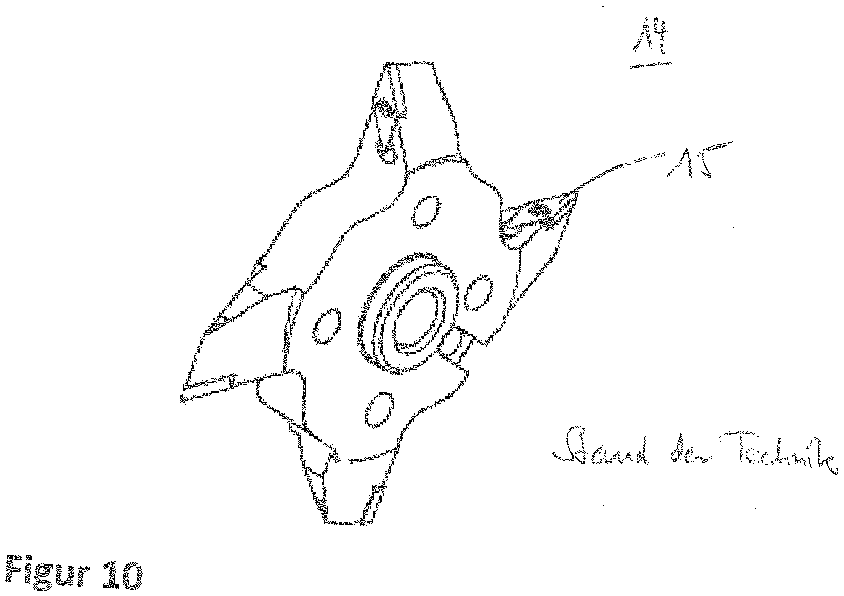

Zudem gibt es schneidende Verfahren, bei denen die Fase an der Zahnkante durch Schneiden erzeugt wird. Hierfür sind Fly-Cutter (Fig. 10) mit von der Verzahnung unabhängiger Schneldkantenform einsetzbar, deren Positionierung einschließlich Achsabstand und Schwenkwinkel während des Anfasens passend geführt werden, um den schneidenden Eingriff der Profilform der Werkstückverzahnung in einer Abwälzbewegung folgen zu lassen. Eine vom Aussehen einem Fly-Cutter zwar ähnliche Form eines schneidenden Anfaswerkzeugs ist der in EP 1 495:824 B1 offenbarte sogenannte "Chamfer-Cutter", der zwar ebenfalls scheibenförmig ist, allerdings Zähne aufweist, deren Schneidkantenform von der Verzahnung abhängig sind. Bei einem solchen Profilfräser ist die Profilform der Fräserzähne auf das Zahnlückenprofil der Werkstückverzahnung abgestimmt. Beim Anfasen schneidet ein Fräserzahn die gesamte Fasenkontur einer Zahnlücke. Dabei wird zwischen Profilfräser und Verzahnung eine Abwälzbewegung derart hergestellt, dass der einem Fräserzahn unmittelbar folgende Fräserzahn die der zuerst geschnittenen Zahnlücke unmittelbar folgende Zahnlücke: schneidet, usw. Derartige Anfaswerkzeuge sind auch in der DE 10 2013 015 240 A1 angesprochen.

Des Weiteren sind auch Varianten von Anfaswerkzeugen vorgeschlagen worden, die mit geometrisch unbestimmter Schneide abtragen, wie in DE 10 2016 004 112 A1 offenbart ist, also schleifend anfasen. Diese Variante hat den Vorteil, dass durch eine Umprofilierung des Anfaswerkzeugs eine höhere. Flexibilität erreicht ist, so dass wenn beispielsweise Parameter der gewünschten Fase geändert werden, keine Konstruktion eines neuen Anfaswerkzeugs im Ganzen erforderlich ist. Zudem ergibt sich beim schleifenden Anfasen eine hohe Oberflächenqualität der Fasenfläche.

JP-S-5531571 A offenbart einen zweiflankigen anfasenden Bearbeitungseingriff mit einem wälzfräsartigen Werkzeug mit geradflankigem Zahnprofil.

US 1,578,589 offenbart ein Anfasverfahren, bei dem ein Bereich eines schneckenförmigen Werkzeugs durch eingearbeitete Schneidkanten anfasend wirkt, während ein durchgehender schneidkantenfreier Bereich als Schneckenantriebsgetriebe herangezogen wird, um ein anzufasendes Kegelrad in Drehung zu versetzen.

CN 20287903 U offenbart ähnlich wie JP-S-5531571 A ein Anfaswerkzeug in Form eines Wälzfräsers mit geradflankigem zahnstangenähnlichen Zahnprofil.

DE 10 2011 118 312 A1 offenbart einen mindestens zwei Drehachsen aufweisenden Trägerarm, an welchem eine Werkzeugspindel mit "Chamfer-Cuttern", ähnlich wie in der EP 1 495 824 B1 offenbart, angeordnet sind.

Alle diese Anfaswerkzeuge haben ihre speziellen Stärken und Schwächen. Der Erfindung liegt die Aufgabe zugrunde, ein Anfaswerkzeug bereitzustellen, das zu einem zufriedenstellenden Kompromiss aus nicht zu langer Bearbeitungszeit und zufriedenstellender Bearbeitungsgenauigkeit und Flexibilität führt.

Diese Aufgabe wird in werkzeugtechnischer Hinsicht gelöst durch ein Anfaswerkzeug zum Anfasen von Werkstückverzahnungen mit den Merkmalen von Anspruch 1. Unter anderem ist das Anfaswerkzeug ausgestattet mit einer schneckenförmigen, pro Schneckengang mehrere Zähne mit geometrisch bestimmter Schneide aufweisenden Verzahnung mit einem für eine Einfiankenbearbeitung im abwälzenden Bearbeitungseingriff mit der Werkstückverzahnung ausgelegten, im Axialschnitt des Werkzeugs gesehen asymmetrischen Zahnprofil.

Das erfindungsgemäße Anfaswerkzeug steht somit beim Anfasen mit der anzufasenden Verzahnung in einem abwälzenden Bearbeitungseingriff, in dem allerdings nur eine schneidende Seite des Profils anfast, während auf der Gegenflanke der angefasten Zahnlücke nicht gearbeitet wird. Hierzu ist das Zahnprofil (=Werkzeug-Bezugsprofil) asymmetrisch gestaltet. Zudem sind mehrere Zähne pro Schneckengang vorgesehen, bevorzugt wenigstens 2, weiter bevorzugt wenigstens 4, insbesondere wenigstens 6 Zähne, so dass nicht ein Zahn die ganze Fase zwischen Zahnkopf und Zahnfuß der Werkstückverzahnung erzeugt; vielmehr wird die Fase an einer Flanke der Werkstückverzahnung durch mehrere aufeinanderfolgende Eingriffe unterschiedlicher Zähne erzeugt und setzt sich somit aus mehreren Hüllschnitten der Anfasschnecke zusammen. Aufgrund der schneidenden Bearbeitung ergeben sich bessere Bearbeitungszeiten als beispielsweise beim schleifenden Anfasen. Die Werkzeuggestaltung mit mehreren Zähnen pro Schneckengang verteilt die Werkzeugabnutzung auf mehrere Zähne, was zu günstigeren Belastungsverhältnissen führt. Zudem kann aufgrund des abwälzenden Bearbeitungseingriffs mit konstantem Achsabstand gearbeitet werden, was das Bearbeitungsverfahren erleichtert. Die Einfiankenbearbeitung erlaubt zudem eine höhere Flexibilität in der Fasengestaltung von Links- und Rechtsflanke der angefasten Verzahnung. So kann für die andere Flanke ein anders ausgelegtes Anfaswerkzeug herangezogen werden. Die Gestaltung der erfindungsgemäßen asymmetrischen Anfasschnecke unterscheidet sich somit auch grundlegend von für das Wälzfräsen eingesetzten Wälzfräsern mit zahnstangenartigem Werkzeugprofil.

Bei der erfindungsgemäßen Gestaltung des Anfaswerkzeugs ist das Verhältnis aus der axialen Länge der nicht bearbeitenden Seite des Zahnprofils zu der axialen Länge der zu einem überwiegenden Teil konkav verlaufenden bearbeitenden Seite geringer als 0,8.

Bei einer bevorzugten Gestaltung ist dieses Verhältnis kleiner als 0,7, sogar als 0,6, insbesondere als 0,5 und/oder größer als 0,05, bevorzugt als 0,1, insbesondere als 0,2. Dies erlaubt günstige Profilgestaltungen der schneidenden Seite bei noch stabiler Zahnform.

Insbesondere für das Anfasen evolventischer Verzahnungen und ihrer Fußausrundung setzt sich das Zahnprofil an der bearbeitenden Zahnflankenseite bevorzugt aus einem konkaven und einem konvexen Teil zusammen. Der konkave Teil besteht vom Fuß bis zum Wendepunkt hin gesehen aus stetig kleiner werdenden Krümmungen. Diese Gestaltung ermöglicht einen Übergang von der Fasenflanke in die Zahnradflanke in einer zur Zahnrad-Stirnfläche parallelen Ebene.

Des Weiteren ist bevorzugt vorgesehen, dass die Änderung des Eingriffswinkelsam Zahnprofil an der bearbeitenden Zahnfiankenseite zwischen Zahnfuß nach der Zahnfußrundung und Übergang in den konvexen Bereich (Wendepunkt) abfällt, mit einem relativen Änderungsfaktor von größer als 0,1, bevorzugt größer als 1, insbesondere größer als 2 und/oder kleiner als 10. Beispielsweise kann so der Eingriffswinkel am Wendepunkt 3-mal so klein sein wie nach der Zahnfußrundung.

In einer besonders bevorzugten Ausführungsform geht die axiale Länge des Anfaswerkzeugs über die wenigstens zwei Werkzeugzähne umfassende Eingriffslänge des Bearbeitungseingriffs hinaus. Die Eingriffslänge bezeichnet diejenige auf die Werkzeugachse projizierte Länge, über die das Werkzeug im Bearbeitungseingriff (ohne Tangentialverschiebungen) beansprucht ist. Bei dieser sind wenigstens zwei Zähne involviert, je nach Mittigkeit der Bearbeitungsposition und Zähnezahl können es durchaus auch drei oder mehr Zähne sein. Durch die größere axiale Länge des Anfaswerkzeugs können bei einer Umpositionierung der Relativlage von Werkzeug und Werkstück wenigstens zum Teil andere Werkzeugzähne in Bearbeitungseingriff mit dem Werkstück kommen. Diese Umpositionierung könnte unmittelbar eine Verschiebung des Werkzeugs entlang seiner Achse sein, öder im Effekt einer solchen Verschiebung gleichkommen, beispielsweise durch Überlagerung von Linearachsbewegungen. Bevorzugt haben alle schneidfähigen Zähne des Werkzeugs hierzu das gleiche Profil und auch die gleiche Zahnhöhe. Bevorzugt sind die Werkzeugzähne hinsichtlich ihrer Schneidwirkung gleich ausgelegt, insbesondere ist vorgesehen, auf Vorschneidezähne, speziell gestaltete Anfangszähne oder inaktive Zähne zu verzichten. Dies ergibt ein effizientes Anfaswerkzeug.

In diesem Zusammenhang ist vorgesehen, dass die axiale Länge des Anfaswerkzeugs wenigstens 50%, insbesondere wenigstens 100% der Eingriffslänge über die Eingriffslänge hinausgeht. Der Vorteil dieser Gestaltung liegt in einer erreichbaren längeren Werkzeugstandzeit, da beispielsweise bei Erreichen eines gewissen Verschleißes in einem Werkzeugbereich das Werkzeug noch nicht durch ein Nachfolgewerkzeug ersetzt werden muss, sondern mit einem anderen Werkzeugbereich des Anfaswerkzeugs weiter angefast werden kann.

Für die Auslegung des Zahnprofils auf eine gewünschte Fase (mit Fasenbreite (es wird beim Anfasen, einer Zahnkantenbearbeitung, die Zahndicke des Werkstücks an der Stirnfläche um weniger als 20% verjüngt, je nachdem auch um weniger als 15% oder auch weniger als 10%, anders als beim sogenannten Anspitzen oder Abdachen einer Verzahnung, bei dem die Werkstückzähne an der Stirnseite mehr als 50% ihrer Zahndicke verlieren, also der ganze Zahn bearbeitet wird) und Fasenwinkel) sind mehrere Varianten denkbar. Zunächst ist es sinnvoll, Parameter des Anfaswerkzeugs festzulegen wie etwa den Außendurchmesser der schneckenförmigen Verzahnung (Anfasschnecke bzw. Anfas-Wälzfräser) und die Gangzahl. Hier kann man sich am Wälzfräsen orientieren, d.h. geeignete Außendurchmesser und Gangzahlen können in einem Bereich liegen, in dem der Fachmann typischerweise einen Wälzfräser zur Erzeugung der anzufasenden Verzahnung wählen würde. Zudem ist es sinnvoll, bei der Werkzeugauslegung zu berücksichtigen, in welcher Achskonstellation der Bearbeitungseingriff stattfinden soll, also in welchem Schwenkwinkel der Werkzeugachse gearbeitet werden soll, entlang der Werkstückachse gesehen, welcher Abstand zwischen Werkzeugdrehachse auf Höhe des Eingriffs und der Lage der Stirnseite der Werkzeugverzahnung bestehen soll (Hobbing Offset Angle). Soweit auf diese Weise eine Mehrzahl der auftretenden Parameter festgelegt ist, ließe sich die Profilform der bearbeitenden Seite des Werkzeugprofils experimentell ausgehend von einem Startprofil über Beobachtung der Anfasergebnisse optimieren. Alternativ lässt sich eine Profilform auch rechnerisch bzw. durch Simulation auslegen, indem das zu bearbeitenden "halbe Profil" (nur eine Flanke an einer Lücke) der Werkstückverzahnung betrachtet wird und man die Hüllschraube des Werkzeugs in derjenigen Stirnebene des Werkstücks betrachtet, die um die gewünschte Fasenbreite von der Stirnseite der Werkstückverzahnung beabstandet ist, da an dieser Stelle Übereinstimmung mit dem Profil der Werkstückverzahnung bestehen soll. Für die nicht schneidende Seite ist lediglich zu beachten, dass es durch deren Durchdringungskurve mit der anderen Werkstückflanke (anderes Halbprofil) nicht zur Kollision kommt. Stellt man fest, dass sich ein größerer als der gewünschte Fasenwinkel ergibt/ergäbe, wählt man z.B. den Schwenkwinkel etwas kleiner und vice versa. Hinsichtlich des Steigungswinkels des/der Schneckengänge ist bevorzugt ein Wert von kleiner als 30° vorgesehen.

Wie oben bereits angesprochen, kann ein Anfaswerkzeug für die Links- und Rechtsflanke der Werkstückverzahnung jeweils unterschiedlich geformt sein. Die Erfindung umfasst somit ebenfalls ein Anfassystem aus zwei oder mehreren Anfaswerkzeugen gemäß Anspruch 7 nach einem der vorgenannten Aspekte, bei dem ein erstes Anfaswerkzeug für das Einflanken-Anfasen der Zahnflanken an den Linksflanken der Werkzeugverzahnung und ein zweites, insbesondere unterschiedlich gebildetes Anfaswerkzeug für das Einflanken-Anfasen der Zahnkanten an den Rechtsflanken der Werkstückverzahnung ausgelegt ist. Bevorzugt sind die wenigstens zwei Anfaswerkzeuge auf einer gemeinsamen Werkzeugspindel eines Werkzeugkopfes angeordnet und werden von dem gleichen Spindelantrieb angetrieben. Es ist jedoch grundsätzlich auch denkbar, dass jedes Werkzeug seine eigene Werkzeugspindel mit eigenem Antrieb hat. Dabei ist insbesondere vorgesehen, dass das Anfassystem sogar vier Anfaswerkzeuge aufweist, jeweils ein Werkzeug für jeweils Links- und Rechtsflanke an einer bzw. der anderen Stirnseite der Werkstückverzahnung. Herstellungstechnisch ist das Anfaswerkzeug bevorzugt aus Vollmaterial durch Materialabtrag hergestellt, also einstückig. Dies weiter bevorzugt auch wenn mehrere Werkzeuge mit gleichem Träger vorgesehen sind, in diesem Fall ist bevorzugt das aus mehreren Anfasfräsern gebildete Kombiwerkzeug insgesamt aus Vollmaterial hergestellt.

In einer besonders bevorzugten Ausgestaltung ist vorgesehen, dass ein oder mehrere Anfaswerkzeuge tragender und zu deren drehendem Antrieb ausgelegter Werkzeugkopf gegenüber der Werkstückdrehachse in wenigstens einer, bevorzugt wenigstens zwei, insbesondere drei linear unabhängigen Raumachsen verfahrbar und für einen Neigungswinkel der Werkzeugachse gegenüber der Werkstückachse verschwenkbar ist, wobei eine diese Verschwenkbarkeit bewirkende Verschwenkeinrichtung von einem Schlitten, insbesondere einem den Achsabstand zwischen den Achsen einstellenden Radialschlitten, unmittelbar getragen ist und dieser Schlitten von einer die verbleibenden Raumachsbewegungen bewirkenden Schlittenanordnung getragen ist.

Diese Gestaltung unterscheidet sich somit von für schneckenförmige Werkzeuge üblichen Werkzeugkopf-Positionieranordnungen, bei denen eine Linearbewegungsachse entlang der Werkzeugdrehachse von der Verschwenkeinrichtung getragen wird. Durch diese Gestaltung wird bei einer Änderung des Schwenkwinkels, der bevorzugt zwischen der Bearbeitung der Linksflanken der Werkstückverzahnung und der Bearbeitung der Rechtsflanken der Werkstückverzahnung vorgenommen wird, die Verschwenkung gewichtsmäßig entlastet. Trägt der Radialschlitten die Verschwenkeinrichtung, kann zudem der am häufigsten benutzte Schlitten gewichtsmäßig relativ am geringsten belastet sein. Die Gestaltung, bei der die Verschwenkeinrichtung unmittelbar von dem Radialschlitten getragen wird, wird zudem auch als unabhängig von der Art der Gestaltung des Anfaswerkzeugs als vorteilhaft angesehen und entsprechend als eigenständig und eigenständig schutzfähig offenbart.

Die Erfindung betrifft somit ebenfalls ein Anfassystem, bei dem ein ein oder mehrere Anfaswerkzeuge tragender und zu deren drehendem Antrieb ausgelegter Werkzeugkopf gegenüber der Werkstückdrehachse in wenigstens einer, bevorzugt wenigstens zwei, insbesondere drei linear unabhängigen Raumachsen verfahrbar und für einen Neigungswinkel der Werkzeugachse gegenüber der Werkstückachse verschwenkbar ist, wobei eine diese Verschwenkbarkeit bewirkende Verschwenkeinrichtung von einem den Achsabstand zwischen den Achsen bestimmenden Radialschlitten, unmittelbar getragen ist und dieser Radialschlitten von einer die verbleibenden Raumachsbewegungen bewirkenden Schlittenanordnung getragen ist.

In einer besonders bevorzugten Ausgestaltung erlaubt die Verschwenkeinrichtung ein Verschwenken um +/-120° oder mehr, insbesondere um +/-160° oder mehr. Auf diese Weise lassen sich bei beispielsweise zwei erfindungsgemäßen Anfaswerkzeugen auf einer gemeinsamen Werkzeugspindel nach dessen Verschwenken auch die Zahnkanten an der anderen Stirnseite der Werkstückverzahnung anfasen. Eine Bearbeitungsreihenfolge ist dabei in weitem Maße frei einstellbar, bevorzugte Varianten sind zunächst das Anfasen von Links- und Rechtsflanke an einer Stirnseite (beispielsweise der nicht-bewegungsauslaufenden Stirnseite der Erzeugung der Werkstückverzahnung, wenn diese insbesondere bereits zeitparallel an einer gegenüber der Anfasposition versetzten Hauptbearbeitungsposition stattfindet), und anschließend das Anfasen an der anderen Stirnseite. Insbesondere bei einer separaten Anfasstation kann jedoch auch vorgesehen werden, zunächst ein Anfaswerkzeug die ihm zugeordneten Flanken an beiden Stirnseiten anfasen zu lassen, und dann das andere Anfaswerkzeug einzusetzen.

In einer weiteren Ausgestaltung des Anfassystems ist vorgesehen, dass als zusätzliches weiteres Anfaswerkzeug/-werkzeuge noch ein oder mehrere Fly-Cutter vorgesehen sind. Fly Cutter sind scheibenförmige Werkzeuge, die wenigstens eine, bevorzugt mehrere Schneiden in gleichem Abstand am Umfang aufweisen, zum Schneiden einer Fasenflanke in einer Abwälzbewegung mit der Verzahnung stehen, auf einer räumlichen Bahnkurve entlang der Profilform der Verzahnung geführt werden und dabei eine sich ändernde Position zur Verzahnung einnehmen in der alle drei Linearachsen X, Y und Z sowie die Schwenkachse A und Werkstückachse C kontinuierlich verstellt werden. Es ist vorgesehen, einen oder mehrere Fly-Cutter einzusetzen, die insbesondere ebenfalls noch in demselben Werkzeugkopf angeordnet sind, also auf einer gemeinsamen Werkzeugspindel aufgespannt sind, und wobei das Anfassystem gesteuert ist, in einer ersten Betriebsart mit den eingangs erläuterten erfindungsgemäßen Anfaswerkzeugen anzufasen und in einer zweiten Betriebsart mit wenigstens einem Fly-Cutter anzufasen. Dies erhöht die beim Anfasen erreichte Flexibilität, in dem je nach Bedarf auf die Vorteile der Fly-Cutter bzw. auf die Vorteile der erfindungsgemäßen Anfaswerkzeuge zurückgegriffen werden kann. Arbeitet man beispielsweise mit sehr großen Werkstück-Chargen, die von den erfindungsgemäßen Anfaswerkzeugen angefast werden sollen, deren Bearbeitung jedoch von einer anderen Werkstück-Charge unterbrochen wird, zu der die Anfaswerkzeuge nicht ausgelegt sind, könnte dennoch ohne zeitaufwändigen Werkzeugwechsel diese andere Werkstück-Charge mit Fly-Cuttern angefast werden. In diesem Zusammenhang ist auch vorgesehen, dass die Werkzeugspindel eine zum Aufspannen von insgesamt wenigstens drei oder sogar wenigstens vier Anfaswerkzeugen ausreichende Länge aufweist und dazu eine wirksame Aufspannlänge von bevorzugt wenigstens 100 mm, insbesondere wenigstens 300 mm aufweist. Zudem kann je nach wirksamer Aufspannlänge der Werkstückspindel auch eine beidseitige Lagerung der Werkzeugspindel vorgesehen sein.

Eine besonders bevorzugte Ausgestaltung des Anfassystems mit wenigstens zwei Anfaswerkzeugen weist bevorzugt eine aus wenigstens zwei Anfaswerkzeugen gebildete und eine gemeinsame Drehachse für die Werkzeuge aufweisende Montageeinheit auf, durch welche eine relative axiale Lage und/oder eine relative Drehlage bezüglich der gemeinsamen Drehachse zwischen jeweils einem vorgegebenen Referenzzahn der Anfaswerkzeuge definiert festgelegt ist. Die Vorteile dieser Gestaltung ergeben sich aus den nachfolgenden Erläuterungen.

So existieren die Zahnflanken an den Werkstücken bereits, an denen die Fasen im abwälzenden Bearbeitungseingriff erzeugt werden. Das heißt, nicht nur die Profile des/der Anfaswerkzeuge sind auf die Werkstückverzahnung angepasst, sondern die Relativlage zwischen Anfaswerkzeug und anzufasendem Werkstück ist in die für den Bearbeitungseingriff ausgelegte Einstellung zu bringen. Ähnlich wie beim Einmittvorgang im Verzahnungsschleifen ist daher zu gewährleisten, dass die Positionen der Werkzeugzähne relativ zur anzufasenden Verzahnung bekannt sind. Üblicherweise erfolgt dies direkt über Bezugsflächen an der Maschine, beispielsweise die Tischfläche der Werkstückspindel und die Planfläche der Frässpindel, wobei jede Spindel pro Umdrehung eine definierte Null-Position durchläuft.

Die relative Lage der anzufasenden Verzahnung zur Maschine ergibt sich aus der Aufspannhöhe über der Tischfläche und Positionen der Zahnlücken der anzufasenden Verzahnung relativ zur Drehlage der Tischspindel sind in dem Fachmann bekannter Weise über kalibrierte Messsysteme wie Einmittsensoren erfassbar.

Aufgrund der Ausführungen des Anfaswerkzeugs über die Schneckenform mit regelmäßiger Teilung am Umfang (Spannuten) sind die Positionen der Werkzeugzähne eines Anfaswerkzeugs untereinander bekannt. Somit genügt es, die relative Lage eines Referenzzahns des Anfaswerkzeugs zur Maschine zu bestimmen, die sich etwa aus ihrem Abstand zur Planfläche der Frässpindel und ihrer Position relativ zur Drehlage der Frässpindel ergibt. Auf diese Weise kann dann der Bezug zwischen den Positionen der Anfaswerkzeugzähne relativ zur anzufasenden Verzahnung über die Maschinenbasis hergestellt werden. Die zur Erreichung der richtigen Positionierung erforderlichen Bewegungen können dann von der Maschinensteuerung über die von ihr gesteuerten Maschinenachsen eingestellt/erreicht werden.

Durch die bevorzugt vorgesehene Montageeinheit ergibt sich trotz des Einsatzes zweier Anfaswerkzeuge und dem eigentlich dadurch zu erwartenden höheren Aufwand zur Positionsbestimmung, nämlich je eine pro Werkzeug, eine deutliche Aufwandsverringerung für den Einrichter, da über die Montageeinheit durch die vordefinierte Festlegung der Zahnlage eines Anfaswerkzeugs gegenüber einem anderen Anfaswerkzeug eine Positionsherstellung etwa durch die oben erläuterte Methode dennoch nur einmal stattfinden muss. Aus der definierten Vorfestlegung ist diese dann automatisch für das andere Anfaswerkzeug rein rechnerisch bestimmbar und somit ohne zusätzlichen Aufwand über bedienerseitig vorgenommene Positionier- oder Kalibriermaßnahmen erreichbar.

So wird der Einsatz des Anfassystems weniger fehleranfällig, aufgrund der vorab bereitgestellten voreingestellten Montageeinheit ist zudem auch eine fehlerhafte Anordnungsreihenfolge der Anfaswerkzeuge in der Maschine nicht mehr zu befürchten.

In einer besonders bevorzugten Gestaltung können die wenigstens zwei Anfaswerkzeuge über einen gemeinsamen Grundkörper verfügen und über definierte Bezugsflächen fest miteinander verbunden sein. Eine ebenfalls nochmals weiter bevorzugte Ausführungsform kann vorsehen, dass die zwei oder noch mehr Anfaswerkzeuge aus einem gemeinsamen Grundkörper gefertigt sind. Eine weiter bevorzugte Ausgestaltung liegt in einer "Quattro"-Montageeinheit mit vier erfindungsgemäß gestalteten Anfaswerkzeugen.

Die einmalig vorbestimmte Relativlage der Anfaswerkzeuge mit ihren Verzahnungen untereinander kann somit beibehalten werden und bleibt somit selbst nach einem Nachschliff der Anfaswerkzeuge erhalten. Zudem erlauben der gemeinsame Grundkörper oder die einstückige Ausgestaltung vernünftige, ggf. sogar bessere Rundlaufeigenschaften.

Zudem kann vorgesehen werden, eine Zuordnung der Relativpositionsinformation zwischen den einzelnen Anfaswerkzeugen der Montageeinheit und der Montageeinheit selbst herzustellen. Diese könnte beispielsweise über einen an der Montageeinheit angebrachten Datenträger erfolgen, oder beispielsweise über einen der Montageeinheit zugewiesenen und über ein Identifikationskennzeichen der Montageeinheit zugeordneten Speicherplatzbereich eines zentralen Speichers. Auf diese Weise kann auch eine Werkzeugverwaltung der einzelnen Montageeinheiten realisiert werden, zudem können beispielsweise auch zusätzlich Prozessdaten einzelner Anfaswerkzeuge oder eines solchen Satzes von Anfaswerkzeugen einer Montageeinheit zugeordnet gesichert/abgespeichert werden.

In bautechnischer Hinsicht sind mehrere Realisierungsmöglichkeiten denkbar. So kann ein gemeinsamer Werkzeugkörper bereits alle zwischen einzelnen Anfaswerkzeugen und vor und hinter ihnen vordefinierten Distanzen beinhalten. Wie oben bereits erläutert, ist durchaus denkbar, dass ein gemeinsamer Werkzeugkörper mehrere Werkzeuge unterschiedlicher Anfastechnologien enthalten kann. Zudem ist es nicht zwingend erforderlich, dass die Schnittrichtungen einzelner Anfaswerkzeuge auf dem gemeinsamen Werkzeugkörper gleichgerichtet sein müssen, da zwischen dem Gebrauch unterschiedlicher Anfaswerkzeuge auch die Drehrichtung um die gemeinsame Drehachse geändert werden kann. Bevorzugt sind formschlüssige Verbindungen zur Werkzeugspindel vorgesehen, sollten mehrere Werkzeuggrundkörper zum Einsatz kommen, die beispielsweise jeweils zwei Anfaswerkzeuge tragen, kann eine formschlüssige Verbindung zwischen den beiden Werkzeuggrundkörpern vorgesehen werden. Grundsätzlich ist es möglich, einen Schneidstoff gezielt zu wählen, beispielsweise können Schneiden aus unterschiedlichen Schneidstoffen eingesetzt werden. In einer bevorzugten Gestaltung ist vorgesehen, die Standzeit aller Werkzeuge auf möglichst gleichmäßigem Niveau zu halten, und dies ggf. durch eine die Verschleißfestigkeit der Werkzeuge erhöhende Beschichtung zu beeinflussen. Der gemeinsame Werkzeugkörper kann eine zentrale axiale Bohrung aufweisen, mit der er auf Fräsdornen aufgenommen werden kann. Eine alternativere Gestaltung wäre eine Massivausführung als Schaft-Werkzeug. Die Lagerung des gemeinsamen Werkzeugkörpers im Werkzeugkopf der eingesetzten Maschine kann einseitig (fliegend) gelagert erfolgen, eine Alternative wäre eine beidseitige Lagerung, welche sich insbesondere für Gestaltungen mit vier Anfaswerkzeugen eignet.

Zudem wird von der Erfindung auch eine Verzahnungsmaschine gemäß Anspruch 12 mit einer Hauptbearbeitungsstation zur Erzeugung einer Werkstückverzahnung in spanender Bearbeitung unter Schutz gestellt, die eine Anfasstation aufweist, welche mit wenigstens einem Anfaswerkzeug nach einem der eingangs genannten Aspekte/oder einem Anfassystem nach einem der weitergehend genannten Aspekte ausgestattet ist. Bei der Hauptbearbeitungsstation könnte es sich etwa um eine Wälzfrässtation oder eine Wälzschälstation (Power-Skiving) handeln, denkbar sind auch Wälzstoßstationen. Es kann vorgesehen sein, dass sich Hauptbearbeitungsstation und Anfasstation den gleichen Werkstücktisch/Werkstückspindel teilen, so dass Parallelbearbeitungen möglich sind. Denkbar und bevorzugt sind aber auch Varianten, in denen ein Werkstückwechselsystem die erzeugten Verzahnungen von der Werkstückspindel der Hauptbearbeitungsstation zu einer getrennten Werkstückspindel der Anfasstation verbringt. Zudem sind denkbar auch Mehrspindel-, insbesondere Zweispindel-Lösungen, bei denen die Werkstückspindeln auf einem Drehträger angeordnet sind und zwischen Hauptbearbeitungsstation und Anfasstation durch Drehung des Drehträgers bewegt werden können. Zudem lässt sich die Erfindung auch für Pick-up-Systeme verwenden, bei denen ein oder mehrere Werkstückspindeln als Pick-up-Spindeln vorgesehen sind.

In verfahrenstechnischer Hinsicht betrifft die Erfindung ein Verfahren gemäß Anspruch 13 zur Erzeugung einer Fase an den Zahnkanten einer Zahnflankenseite einer Werkstückverzahnung mit einem erfindungsgemäßen Anfaswerkzeug unter Ausführung einer Einflankenbearbeitung. Das Anfasen erfolgt dabei in Wälzkopplung.

Zudem sieht das Verfahren vor, dass die Zahnkanten an beiden Zahnfiankenseiten einer Stirnseite der Werkstückverzahnung mit einem erfindungsgemäßen Anfassystem angefast werden, durch Ausführen von zwei Einflankenbearbeitungen. Es können auch durch weitere Einflankenbearbeitungen and der anderen Stirnseite Fasen an beiden Stirnseiten erzeugt werden.

In einer besonders bevorzugten Verfahrensgestaltung wird mit einem Anfaswerkzeug, dessen axiale Länge größer ist als die axiale Länge die für das Schneiden der jeweiligen Fasenflanke erforderlich ist, eine Werkstückverzahnung mit einer bezüglich der axialen Länge des Anfaswerkzeugs gesehen ersten Werkzeugbereich angefast, und eine andere Werkstückverzahnung vom gleichen Typ mit einem wenigstens zum Teil andere Werkzeugzähne aufweisenden zweiten Werkzeugbereich angefast. Dies erhöht, wie oben bereits erläutert, die Standzeit der Anfaswerkzeuge des Anfassystems.

In einer besonders bevorzugten Ausgestaltung, das beim Anfasen schrägverzahnter Werkstückverzahnungen zum Einsatz kommen kann, erfolgt das Anfasen an den jeweiligen Kanten (der spitzen und der stumpfen Kante) der Schrägverzahnung in unterschiedlichen Schwenkstellungen der Werkzeugdrehachse, wobei an der spitzen Seite bezogen auf die in Achsabstandsrichtung gesehen orthogonale Lage bevorzugt mit einem Schwenkwinkel von betragsmäßig kleiner 10°, insbesondere kleiner 5° gearbeitet wird und/oder an der stumpfen Seite mit einem Schwenkwinkel von betragsmäßig bevorzugt größer als 5°, insbesondere größer als 10° und bevorzugt kleiner als 35°, insbesondere kleiner als 30°. Diese Einstellungen tragen dazu bei, dass eine möglichst gleichmäßige Fase zu den gewünschten Fasenparametern erzeugt werden kann, der Hobbing-Offset Angle HOA ist bevorzugt größer als 10°, insbesondere als 20° und/oder bevorzugt kleiner als 70°, insbesondere als 60°.

Des Weiteren ist bevorzugt vorgesehen, dass man beim Anfasen der stumpfen Seite tangential gesehen weiter außermittig arbeitet als beim Anfasen der spitzen Seite, insbesondere um wenigstens 5 mm, bevorzugt wenigstens 10 mm, weiter außen. Dies erlaubt eine günstige Ausnutzung der verbleibenden Freiheitsgrade bei der Auslegung der Werkzeuge, wie etwa dem Steigungswinkel der Schneckengangsteigung/-steigungen oder axial gesehen dem Strecken oder Stauchen des Zahnprofils.

Weitere Einzelheiten, Merkmale und Vorteile der Erfindung ergeben sich aus der nachfolgenden Beschreibung mit Bezug auf die beigefügten Figuren, von denen
- Figur 1: ein Werkzeug-Zahnprofil im Achsschnitt
- Figur 2: ein Werkzeug-Zahnprofil im Achsschnitt
- Figur 3: schematisch im Achsschnitt einen Anfas-Wälzfräser im Eingriff mit einem Zahnrad
- Figur 4: eine Position eines Anfas-Wälzfräsers beim Schneiden der spitzen Fasenflanke eines schrägverzahnten Zahnrades
- Figur 5: eine Position eines Anfas-Wälzfräsers beim Schneiden der stumpfen Fasenflanke eines schrägverzahnten Zahnrades
- Figur 6: einen Anfas-Wälzfräser mit asymetrischem Zahnprofil
- Figur 7: einen Bearbeitungskopf mit zwei Anfas-Wälzfräsern
- Figur 8: einen Bearbeitungskopf mit vier Anfas-Wälzfräsern
- Figur 9: eine Achsanordnung einer Anfaseinheit
- Figur 10: einen Fly-Cutter, sowie
- Figur 11: eine erläuternde Skizze einer Montageeinheit mit vier Anfaswerkzeugen
zeigt.

In den Figuren werden die folgenden Kurzzeichen verwendet:
A Schwenkachse A
B Werkzeugspindelachse B
C Werkstückachse C
X Radialachse X
Y Tangentialachse Y
Z Axialachse Z
HOA Hobbing Offset Angle
TCP Tool Center Point
PCP Part Center Point
b_{f} Fasenbreite
dₐ₂ Zahnrad-Kopfkreisdurchmesser
d_{f2} Zahnrad-Fußkreisdurchmesser
r₀ Werkzeug-Kopfkreisradius
η Schwenkwinkel
Δx radiale Distanz zwischen TCP und PCP
Δy tangentiale Distanz zwischen TCP und PCP
Δz axiale Distanz zwischen TCP und PCP
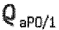 Werkzeugprofil-Kopfradius der nicht schneidenden Zahnflanke
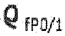 Werkzeugprofil-Fußradius der nicht schneidenden Zahnflanke
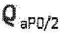 Werkzeugprofil-Kopfradius der schneidenden Zahnflanke
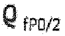 Werkzeugprofil-Fußradius der schneidenden Zahnflanke
α_{P0/1} Werkzeug-Profilwinkel der nicht schneidenden Zahnflanke
p Axialteilung des Werkzeug-Bezugsprofils
a_{p/1} Teil der Axialteilung des Werkzeug-BP der nicht schneidenden Zahnflanke
a_{p/2} Teil der Axialteilung des Werkzeug-BP der schneidenden Zahnflanke
h_{aP0} Kopfhöhe des Werkzeug-Bezugsprofils
h_{fP0} Fußhöhe des Werkzeug-Bezugsprofils
L Werkzeuglänge

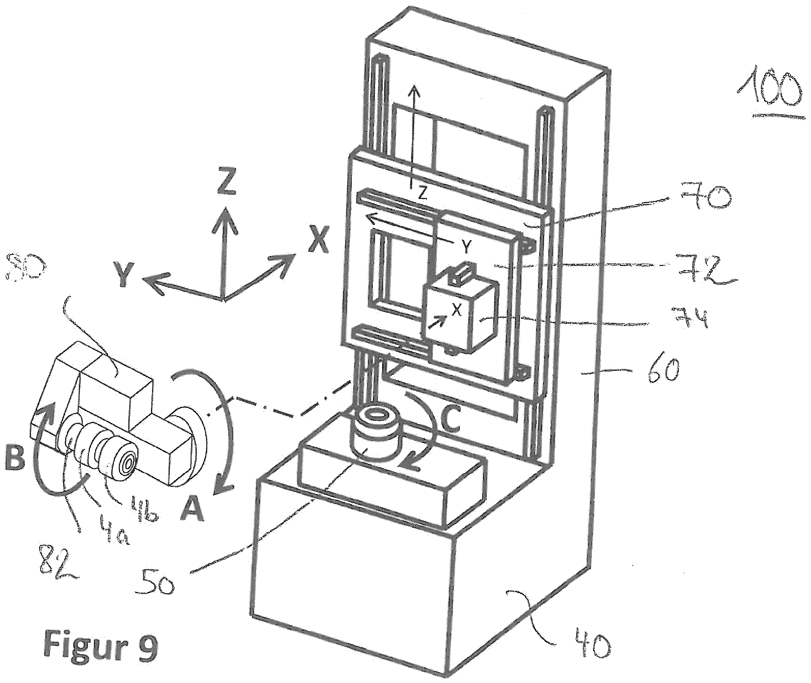

Zunächst wird mit Bezug auf Fig. 9 eine Anfaseinheit 100 nebst zugehörigen Bewegungsachsen dargestellt, die eine mögliche und bevorzugte Ausgestaltung darstellt. Werkstückseitig erkennbar ist eine auf einem Maschinenbett 40 der Anfaseinheit 100 drehbar gelagerte Werkstückspindel 50 zur Aufnahme eines nicht gezeigten Werkstücks, wobei die Drehachse der Werkstückspindel (Werkstückachse) mit C bezeichnet ist.

Werkzeugseitig ist ein Ständer 60 vorgesehen, der eine Schlittenanordnung zur Realisierung von linearen Relativbewegungen zwischen Werkzeug und Werkstück, in diesem Ausführungsbeispiel in Form senkrecht zueinander stehenden Bewegungsachsen X, Y, Z, trägt. So ist ein Axialschlitten 70 vorgesehen, dessen Bewegungsrichtung Z parallel zur Werkstückdrehachse verläuft und somit in diesem Ausführungsbeispiel vertikal. Der Schlitten 70 trägt wiederum einen Tangentialschlitten 72 mit Bewegungsrichtung Y. In einer Öffnung des Tangentiaischlittens 72 ist ein Radialschlitten 74 geführt. Der Radialschlitten 74 trägt in schwenkbarer Weise (mit Schwenkachse A) einen Werkzeugkopf 80. Der Werkzeugkopf 80 weist eine in diesem Ausführungsbeispiel indirekt (CNC) angetriebene Werkzeugspindel 82 auf, mit Spindelachse B. Denkbar sind neben solchen indirekten Antrieben mit Riementrieb zwischen Motor und Spindel auch eine direkt CNC angetriebene Spindel. In dem in Fig. 9 dargestellten Ausführungsbeispiel trägt die Werkstückspindel 82 zwei Anfaswerkzeuge, die nachstehend mit Bezug auf weitere Figuren genauer erläutert werden.

Durch die Anordnung des Radialschlittens X, dessen Bewegung den Achsabstand zwischen der Werkzeugdrehachse B und der Werkstückachse C ändert, als nur noch die Schwenkeinrichtung mit Schwenkachse A, aber keine der anderen Linearbewegungsachsschlitten tragenden Schlitten ist die Maschinenachse für die Schwenkbewegung und auch Radialbewegung nur geringen Tragelasten und -momenten ausgesetzt.

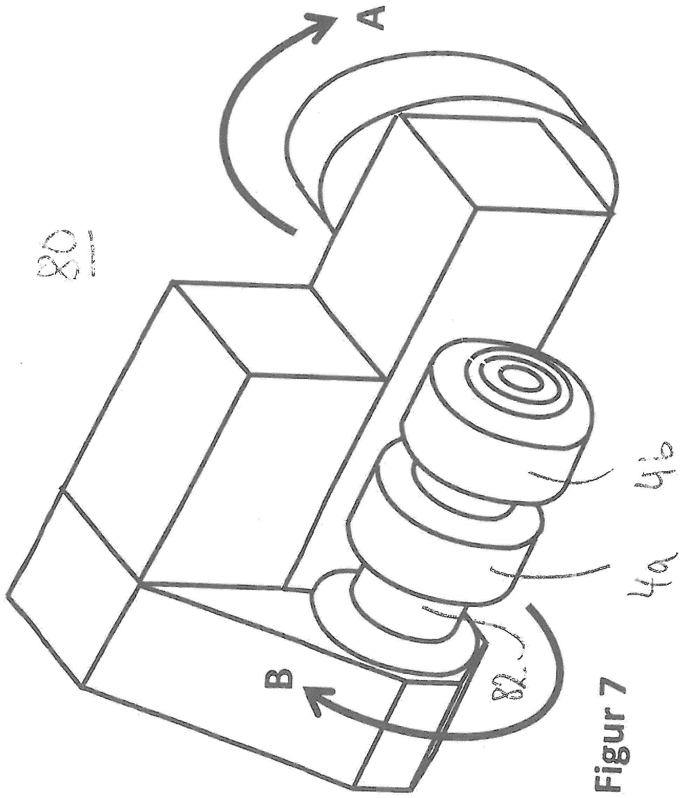

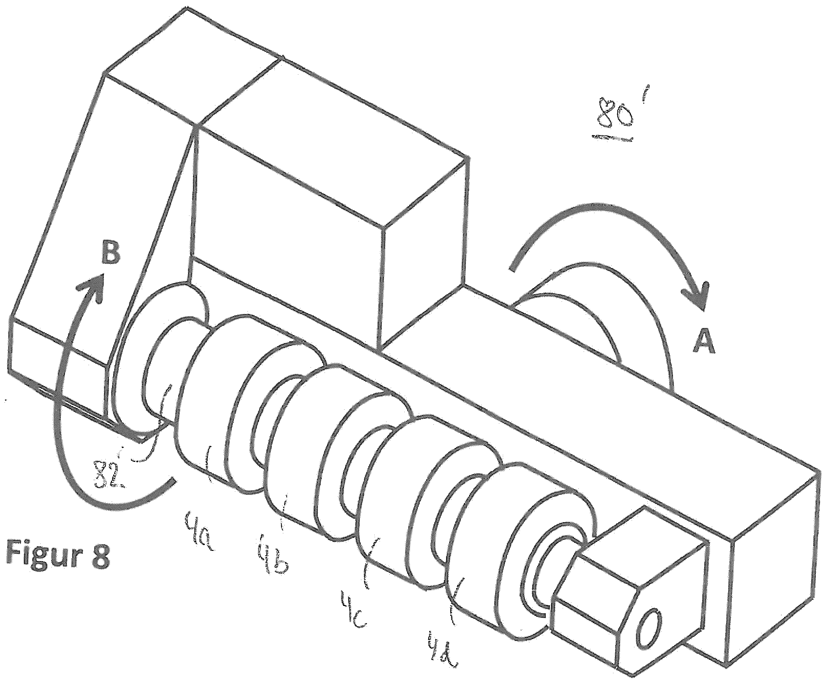

Der Werkzeugkopf 80 ist in Fig. 7 nochmals vergrößert dargestellt. Man erkennt eine einseitige Aufhängung der Werkzeugspindel 82. In einer anderen, in Fig. 8 dargestellten Ausgestaltung könnte eine Werkzeugspindel 82' jedoch auch beidseitig gelagert sein, und ggf. auch eine höhere Anzahl von Werkzeugen tragen, beispielsweise vier Anfaswerkzeuge 4a, 4b, 4c, 4d.

Bei all diesen Anfaswerkzeugen 4a, 4b, 4c und 4d könnte es sich um erfindungsgemäße Anfas-Wälzfräser handeln, es ist jedoch auch denkbar, dass z.B. zwei der Werkzeuge erfindungsgemäß Anfas-Wälzfräser sind, während zwei andere in Form von in Fig. 10 dargestellten Fly Cuttern vorgesehen sind.

Im ersteren Fall könnte beispielsweise ein asymmetrischer Anfas-Wälzfräser für das Anfasen von jeweils Links- und Rechtsflanke an oberer und unterer Stirnseite eines Werkstücks vorgesehen sein. In diesem Fall mag einen Verschwenkbarkeit für die Schwenkachse A aus der Horizontalen um +-80° oder geringer für die Zwecke des Anfasens ausreichend sein. Bevorzugt ist jedoch vorgesehen, dass eine Verschwenkbarkeit um mehr als 160°, insbesondere mehr als 180° gegeben ist, so dass beispielsweise für die Gestaltung des Werkzeugkopfs 80 von Fig. 7 die beiden Anfaswerkzeuge 4a, 4b, die beispielsweise für die bei einem schräg verzahnten Werkstück stumpfe und spitze Kante vorgesehen sind, an einer Stirnseite arbeiten und bei Bedarf nach entsprechendem Umschwenken an der anderen Stirnseite.

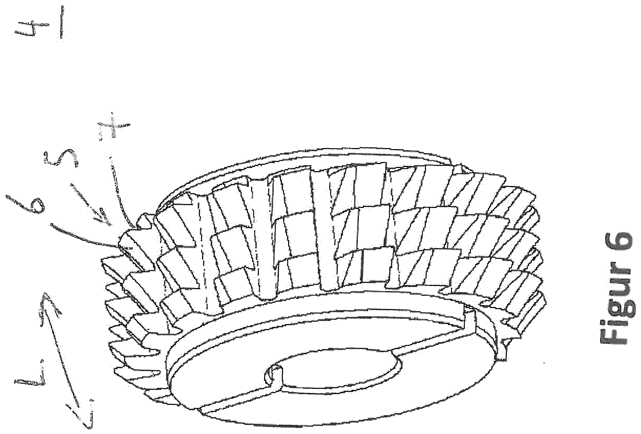

Bei jedem der Anfaswerkzeuge 4a, 4b, 4c, 4d kann es sich um ein wie in Fig. 6 dargestelltes Werkzeug mit schneckenförmig angeordneten Zähnen 5 handeln. In Fig. 6 ist ein eingängiger Anfas-Wälzfräser 4 dargestellt, es sind jedoch auch mehrgängige Varianten denkbar. Allgemein ist es bevorzugt, wenn weniger als 8, insbesondere weniger als 6 Schneckengänge vorgesehen sind.

Gut erkennbar ist das im Axialschnitt des Werkzeugs 4 asymmetrische Zahnprofil. So sind die Zähne 5 mit einem deutlich asymmetrischen Profil versehen, und weisen eine bearbeitende Zahnflanke 6 und eine nicht bearbeitende Zahnflanke 7 auf. Der Anfasfräser 4 ist somit für eine reine Einflankenbearbeitung vorgesehen. In Fig. 7 wäre dann der zweite Anfas-Wälzfräser auf Werkzeugspindel 82 für die Bearbeitung der anderen Flanke des Werkstücks ausgelegt.

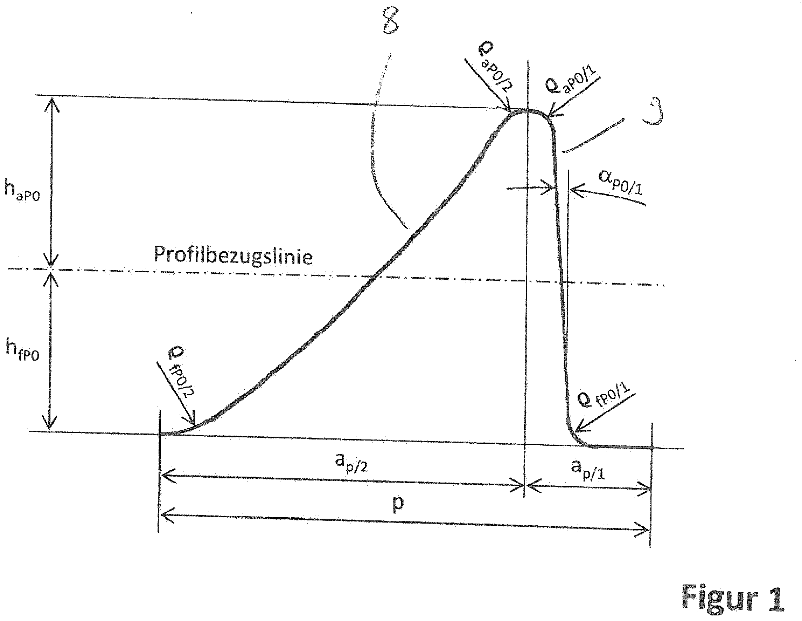

Das asymmetrische Zahnprofil des Anfas-Wälzfräsers 4 für ein Ausführungsbeispiel ist in Fig. 1 detaillierter dargestellt. Das Profil 8 der bearbeitenden Zahnflanke 6 ist in Fig. 1 in dem Teil a_{p/2} der Axialteilung des Werkzeugs dargestellt. Ausgehend von der Krümmung im Fußbereich verläuft das Profil 8 in konkaver Weise, bis es nahe dem Übergang zum Teil der Axialteilung der nicht-schneidenden Zahnflanke a_{p/1} vor Übergang in die Zahnkopfrundung einen Wendepunkt durchläuft. Man erkennt, dass der Profilverlauf 9 im Bereich der nicht-schneidenden Zahnflanke 7 zwischen Kopfrundung und Fußrundung deutlich steiler verläuft als das Profil 8 an der schneidenden Zahnflanke 6.

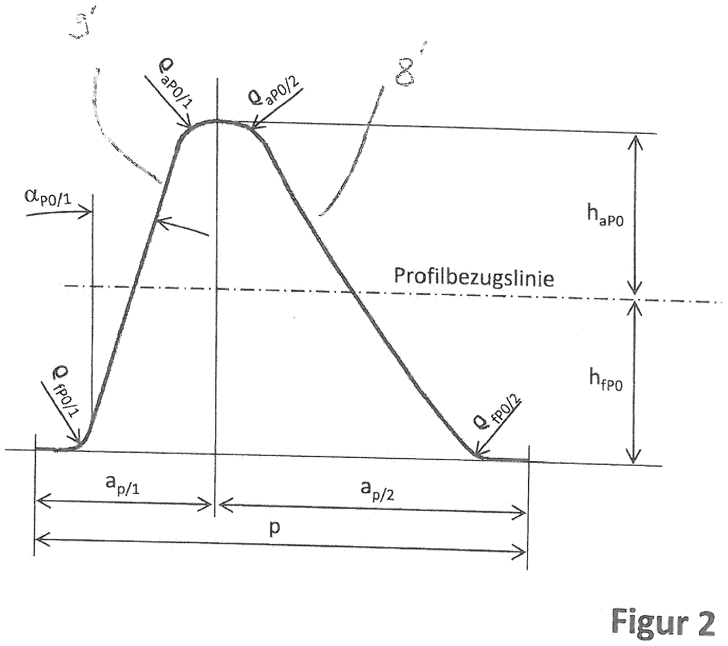

Für dieses Ausführungsbeispiel ist das Werkzeugprofil des Anfaswerkzeugs, das die spitze Kante des Werkstücks (beispielsweise schrägverzahnt mit Schrägungswinkel β zwischen 10° und 35°) bearbeitet, in Fig. 2 dargestellt. Auch hier ist eine deutliche Asymmetrie gut erkennbar, der Profilverlauf 8' an der schneidenden Zahnflanke verläuft deutlich weniger steil als der Profilverlauf 9' an der nicht-schneidenden Zahnflanke des Werkzeugs. Der Unterschied ist jedoch weniger stark ausgeprägt wie bei dem in Fig. 1 dargestellten Profilverlauf 8, 9 für die Bearbeitung der stumpfen Kante des Werkstücks.

Die Asymmetrien der Zahnprofile lassen sich als Quotienten aus den Verhältnissen (a_{p/2}:a_{p/1}) jeweils für die stumpfe und spitze Seite darstellen. Es wird bevorzugt, wenn der Quotient aus dem Verhältnis (a_{p/2}:a_{p/1})_{stumpf} bei dem die stumpfe Kante anfasenden Werkzeugprofil und dem Verhältnis (a_{p/2'}: a_{p/1})_{spitz} bei dem die spitze Kante anfasenden Werkzeugprofil größer ist als 1,25, insbesondere als 1,4 und bevorzugt kleiner ist als 3,0, bevorzugt als 2,5, insbesondere als 2,0.

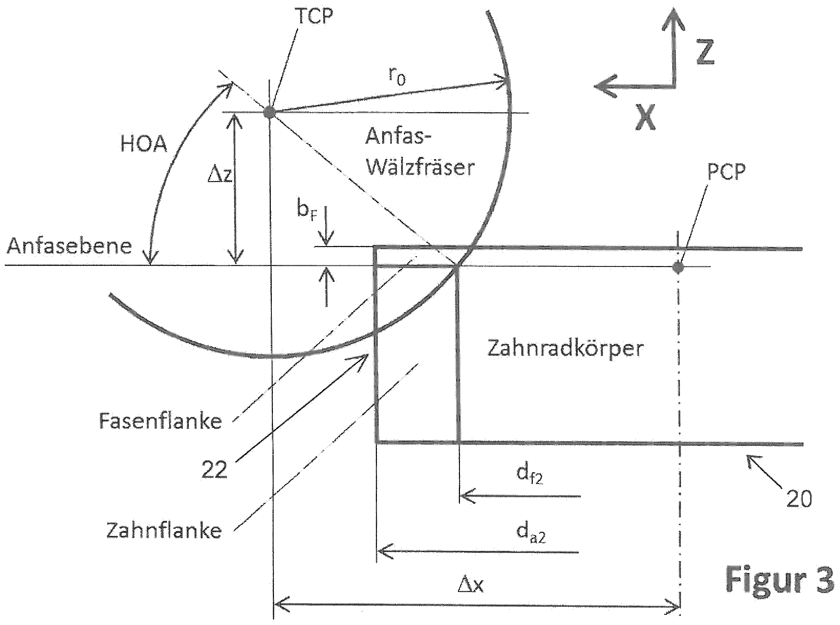

Die Relativlage des Bearbeitungseingriffs ist in schematischer Weise in Fig. 3 dargestellt, die Papierebene von Fig. 3 ist dabei die Radial-Axialebene und die Blickrichtung somit die Tangentialrichtung Y für das in Fig. 9 dargestellte Koordinatensystem.

Die Maschinenachseinstellungen für das Anfasen werden dabei so gewählt, dass der Anfas-Wälzfräser an seinem Kopfkreis bei tiefster radialer Zustellung (ΔX minimal) bei einem eingestellten Hobbing-Offset Angle HOA im Abstand der Fasenbreite b_{F} von der dem Werkzeug zugewandten Stirnseite des Werkstücks auf den Zahnfuß des Werkstücks 20 trifft. Als Zustellungs- und Vorschubachsen kommen dabei bevorzugt die Axialachse Z und die Radialachse X in Betracht. In einer bevorzugten Gestaltung wird die Z-Achsposition der Werkzeugmitte TCP auf die in Fig. 3 dargestellte Höhe (mit Abstand ΔZ von der Anfasebene) eingestellt und die Relativbewegung zwischen Werkzeug 4 und Werkstück 20 kann sich auf eine rein radiale Bewegung X beschränken. Es sind jedoch auch kombinierte XZ-Bewegungen denkbar.

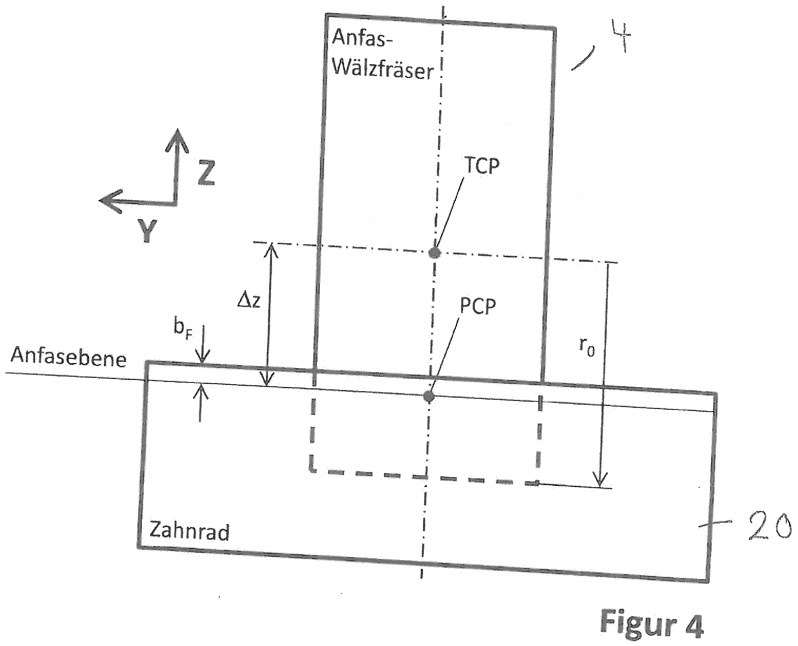

In Fig. 4 ist eine bevorzugte Relativlage zwischen Werkzeug 4 und Werkstück (Zahnrad) 20 in der Tangential-/Axialebene dargestellt, die Blickrichtung ist hier die Radialrichtung X. In Fig. 4 ist zu erkennen, dass der Schwenkwinkel A auf Null eingestellt ist, als ein konkretes Ausführungsbeispiel, wie oben erläutert, für das Anfasen der spitzen Zahnkante des Werkstücks bei geringem Schwenkwinkel η.

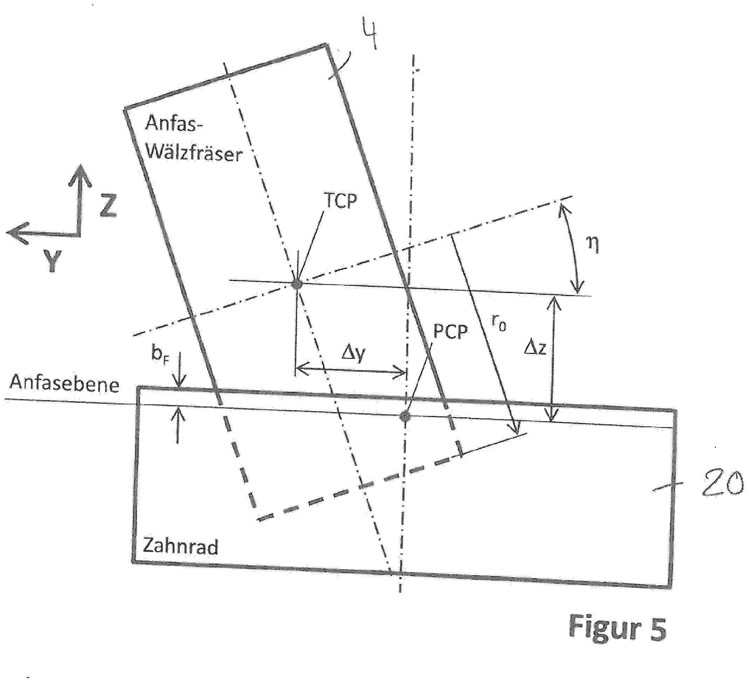

Für das Anfasen der stumpfen Zahnkante des Werkstücks 20 wird dagegen ein deutlich von Null verschiedener Schwenkwinkel η als Einstellung für die Schwenkachse A bevorzugt. Zudem wird das Werkzeug 4, wie deutlich aus einem Vergleich der Fig. 4 und 5 hervorgeht, außermittig angeordnet, die die Werkzeugmitte TCP bzw. die Werkstückmitte PCP enthaltenden Ebenen orthogonal zur Tangentialrichtung Y sind um ΔY voneinander beabstandet.

Gegenüber dem in Fig. 10 dargestellten Fly-Cutter hat der in Fig. 6 dargestellte Anfas-Wälzfräser 4 einen deutlich größeren Bereich schneidender Kanten, aufgrund der Mehrzahl der Zähne pro Gang. Auch wenn nicht alle Zahnkanten in einer Bearbeitungsstellung bearbeitend wirken, kann durch Axialverschiebung bezüglich der Werkzeugachse der Bearbeitungsbereich entlang der Axialachse verschoben werden und somit immer neue noch unabgenutzte Schneidkanten zur Bearbeitung herangezogen werden, bevor das Anfaswerkzeug aufzubereiten oder auszutauschen ist. Es ergeben sich somit auch Vorteile in der Werkzeugstandzeit.

Der in Fig. 6 dargestellte Anfas-Wälzfräser bzw. auch die in den Figuren 1 und 2 dargestellten Werkzeugprofile sind auf das anzufasende Werkstück bei den vorgesehenen Bearbeitungsrelativlagen abgestimmt und somit werkstückgebunden. Der in Fig. 10 dargestellte Fly-Cutter 14 ist dagegen mit seiner symmetrischen Gestaltung der durch Wendeschneidplatten 15 gebildeten Schneidkanten werkstückungebunden einsetzbar, bei dessen Einsatz erfolgt die Bildung der Fase am Werkstück über gekoppelte Maschinenachsbewegungen, die je nach anzufasendem Werkstück individuell vorgenommen werden.

Bei einer Ausgestaltung des in Fig. 8 dargestellten Werkzeugkopfes 80' wird eine Ausführungsform mit äußerst flexibler Anwendungsmöglichkeit geschaffen, indem zwei Anfas-Wälzfräser und zwei Fly-Cutter miteinander kombiniert werden. So kann beispielsweise eine größere Charge identischer Werkstücke, für die die Anfas-Wälzfräser ausgelegt sind, bearbeitet werden, zwischendurch jedoch auch nicht zu dieser Werkstück-Charge passenden Werkstücke angefast werden, indem die Fly-Cutter herangezogen werden.

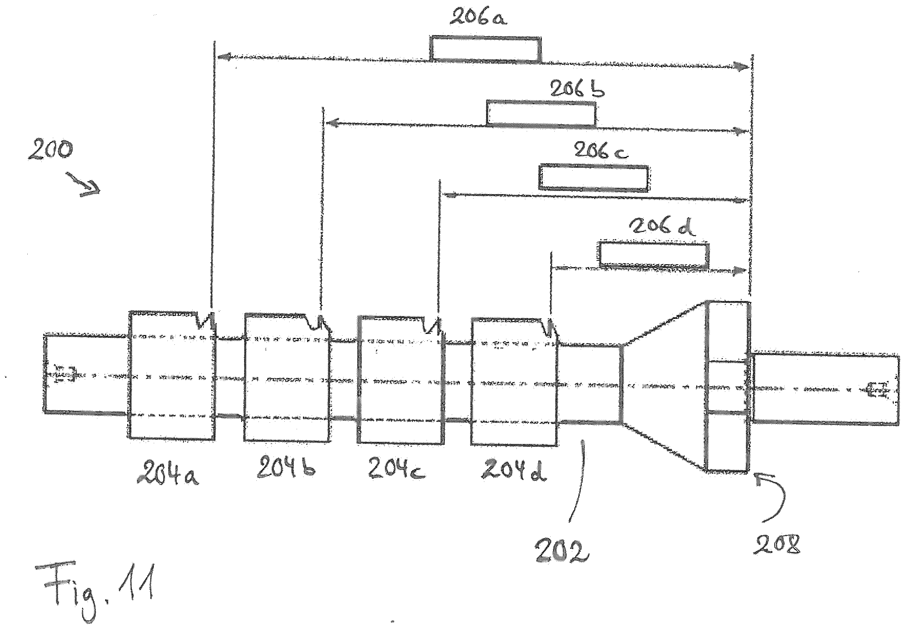

In Fig. 11 ist das oben erläuterte Anfassystem unter dem Aspekt der Montageeinheit nochmals kurz erläutert. Dargestellt ist schematisch eine Montageeinheit 200 mit einem gemeinsamen Grundkörper 202, der vier Anfaswälzfräser 204a, 204b, 204c und 204d trägt. Die Abstände zwischen den einzelnen Anfaswerkzeugen sind definiert festgelegt und ändern sich im Gebrauch der Montageeinheit 200 nicht mehr. Die rechteckigen Kästen mit dem Bezugszeichen 206a, 206b, 206c und 206d deuten schematisch den definiert festgelegten Abstand zwischen einer Planfläche der Frässpindel 208 und der Axialposition des ersten vollen Zahns eines jeden Anfaswerkzeugs an, die Drehlagenposition dieses Zahns ist in diesem Ausführungsbeispiel jeweils gleich ausgerichtet. Sowohl diese Axialpositionen als auch die Drehlagenpositionen liegen abgespeichert vor und stehen einem Bediener einer Anfasmaschine bei Einsatz der Montageeinheit 200 zur Verfügung, um die Positionseinstellungen zur Anfasbearbeitung jedes einzelnen Anfaswerkzeugs der Montageeinheit 200 etwa wie oben erläutert vornehmen zu können.

Die Erfindung ist nicht auf die in den vorgenannten Ausführungsbeispielen dargestellten Merkmale und Einzelheiten eingeschränkt.

## Patentansprüche

1. Anfaswerkzeug (4) zum Anfasen von Werkstückverzahnungen (22), mit einer schneckenförmigen, pro Schneckengang mehrere Zähne (5) mit geometrisch bestimmter Schneide aufweisenden Verzahnung mit einem für eine Einflankenbearbeitung im abwälzenden Bearbeitungseingriff mit der Werkstückverzahnung (22) ausgelegten, im Axialschnitt des Werkzeugs gesehen asymmetrischen Zahnprofil (8, 9; 8', 9'), **dadurch gekennzeichnet, dass** das Verhältnis aus der axialen Länge (a_{p/1}) der nicht bearbeitenden Seite des Zahnprofils zu der axialen Länge (a_{p/2}) der zu einem überwiegenden Teil konkav verlaufenden bearbeitenden Seite geringer ist als 0,8.

2. Anfaswerkzeug nach Anspruch 1, bei dem das Verhältnis aus der axialen Länge (a_{p/1}) der nicht bearbeitenden Zahnflankenseite des Zahnprofils zu der axialen Länge (a_{p/2}) der bearbeitenden Seite geringer ist als 0,7, bevorzugt geringer ist als 0,6, insbesondere geringer ist als 0,5, und/oder größer ist als 0,05, bevorzugt größer als 0,1, insbesondere größer als 0,2.

3. Anfaswerkzeug nach Anspruch 1 oder 2, bei dem das Zahnprofil der bearbeitenden Zahnflankenseite zum Zahnkopf hin in eine konvexe Form übergeht.

4. Anfaswerkzeug nach Anspruch 3, bei dem der Eingriffswinkel des Zahnprofils an der bearbeitenden Zahnflankenseite zwischen Zahnfuß und Übergang in den konvexen Bereich abfällt, mit einem relativen Änderungsfaktor von größer als 0,1, bevorzugt größer als 1, insbesondere größer als 2 und/oder kleiner als 10.

5. Anfaswerkzeug nach einem der vorhergehenden Ansprüche, dessen axiale Länge (L) über eine wenigstens zwei Werkzeugzähne umfassende Eingriffslänge des Bearbeitungseingriffs hinausgeht, so dass bei einer einer Verschiebung des Werkzeugs entlang seiner Achse gleichkommenden Umpositionierung der Relativlage von Werkzeug und Werkstück wenigstens zum Teil andere Werkzeugzähne in Bearbeitungseingriff mit dem Werkstück kommen können.

6. Anfaswerkzeug nach Anspruch 5, bei dem die axiale Länge (L) des Anfaswerkzeugs wenigstens 50%, insbesondere wenigstens 100% über die Eingriffslänge hinausgeht.

7. Anfassystem (100) aus zwei oder mehreren Anfaswerkzeugen nach einem der vorhergehenden Ansprüche, bei dem ein erstes Anfaswerkzeug (4a) für das Einflankenanfasen der Zahnkanten an den Linksflanken der Werkzeugverzahnung und ein zweites, insbesondere unterschiedlich gebildetes Anfaswerkzeug (4b) für das Einflankenanfasen der Zahnkanten an den Rechtsflanken der Werkstückverzahnung ausgelegt ist.

8. Anfassystem nach Anspruch 7, bei dem ein ein oder mehrere Anfaswerkzeuge (4a, 4b; 4c, 4d) tragender und zu deren drehendem Antrieb ausgelegter Werkzeugkopf (80; 80') gegenüber der Werkstückdrehachse (C) in wenigstens einer, bevorzugt wenigstens zwei, insbesondere drei linear unabhängigen Raumachsen (X, Y, Z) verfahrbar und für einen Neigungswinkel (η) der Werkzeugachse gegenüber der Werkstückachse verschwenkbar ist, wobei eine diese Verschwenkbarkeit (A) bewirkende Verschwenkeinrichtung von einem Schlitten, insbesondere einem den Achsabstand zwischen den Achsen einstellenden Radialschlitten (74), unmittelbar getragen ist und dieser Schlitten von einer die verbleibenden Raumachsbewegungen bewirkenden Schlittenanordnung (70, 72) getragen ist.

9. Anfassystem nach Anspruch 8, bei dem die Verschwenkeinrichtung ein Verschwenken um +/-120° oder mehr, insbesondere um +/-160° oder mehr erlaubt.

10. Anfassystem nach einem der Ansprüche 7 bis 9, bei dem als weiteres Anfaswerkzeug ein oder mehrere Fly-Cutter (14) vorgesehen sind, die insbesondere ebenfalls noch in demselben Werkzeugkopf (80') angeordnet sind, und wobei das Anfassystem gesteuert ist, in einer ersten Betriebsart mit den nach einem der Ansprüche 1 bis 6 ausgelegten Anfaswerkzeugen anzufasen und in einer zweiten Betriebsart mit wenigstens einem Fly-Cutter-Anfaswerkzeug anzufasen.

11. Anfassystem nach einem der Ansprüche 7 bis 10, mit einem aus wenigstens zwei der Anfaswerkzeuge gebildeten und eine gemeinsame Drehachse für die Werkzeuge aufweisenden Montageeinheit, durch welche eine relative axiale Lage und/oder eine relative Drehlage bezüglich der gemeinsamen Drehachse, zwischen jeweils einem vorgegebenen Referenzzahn der Anfaswerkzeuge definiert festgelegt ist.

12. Verzahnungsmaschine mit einer Hauptbearbeitungsstation zur Erzeugung einer Werkstückverzahnung in spanender Bearbeitung, und mit einem ein Anfaswerkzeug nach einem der Ansprüche 1 bis 6 und/oder ein Anfassystem nach einem der Ansprüche 7 bis ausgestatteten Anfassystem (100).

13. Verfahren zum Erzeugen einer Fase an den Zahnkanten einer Zahnflankenseite einer Werkstückverzahnung mit einem Anfaswerkzeug nach einem der Ansprüche 1 bis 6, unter Ausführung einer Einflankenbearbeitung.

14. Verfahren nach Anspruch 13, bei dem die Zahnkanten an beiden Zahnflankenseiten einer Stirnseite der Werkstückverzahnung mit einem Anfassystem (100) nach einem der Ansprüche 7 bis 10 angefast werden, durch Ausführen von zwei Einflankenbearbeitungen.

15. Verfahren nach einem der Ansprüche 13 oder 14, bei dem eine Werkstückverzahnung mit einem bezüglich der axialen Länge (L) des Anfaswerkzeugs gesehenen ersten Werkzeugbereich angefast wird, und eine andere Werkstückverzahnung vom gleichen Typ mit einem wenigstens zum Teil andere Werkzeugzähne aufweisenden zweiten Werkzeugbereich angefast wird.

16. Verfahren nach einem der Ansprüche 13 bis 15, bei dem die Werkstückverzahnungen schrägverzahnt sind, und die Anfaswerkzeuge zum Anfasen der spitzen und der stumpfen Kante der Schrägverzahnung in unterschiedlichen Schwenkstellungen der Werkzeugdrehachse zu der Werkstückdrehachse erfolgt, wobei bezogen auf die in Achsabstandsrichtung gesehen orthogonalen Lage der Drehachsen (B, C) an der spitzen Seite bevorzugt mit einem Schwenkwinkel (η) von betragsmäßig kleiner 10°, insbesondere kleiner 5° gearbeitet wird und/oder an der stumpfen Seite mit einem Schwenkwinkel (η) von betragsmäßig bevorzugt größer als 5°, insbesondere größer als 10° und bevorzugt kleiner als 35°, insbesondere kleiner als 30°.

17. Verfahren nach einem der Ansprüche 13 bis 16, bei dem man beim Anfasen der stumpfen Seite tangential gesehen weiter außermittig arbeitet als beim Anfasen der spitzen Seite, insbesondere um wenigstens 5 mm, bevorzugt wenigstens 10 mm weiter außen.

## Claims

1. A chamfering tool (4) for chamfering workpiece toothings (22), comprising a helical toothing having, for each flight, a plurality of teeth (5) with a geometrically defined cutting edge and having a tooth profile (8, 9; 8', 9') which is designed for single-flank machining in rolling machining engagement with the workpiece toothing (22) and is asymmetrical as viewed in the axial section of the tool,
**characterised in that** the ratio of the axial length (a_{p/1}) of the non-machining tooth profile side to the axial length (a_{p/2}) of the predominantly concave machining side is smaller than 0.8.

2. The chamfering tool according to claim 1, wherein the ratio of the axial length (a_{p/1}) of the non-machining tooth flank side of the tooth profile to the axial length (a_{p/2}) of the machining side is smaller than 0.7, preferably smaller than 0.6 and in particular smaller than 0.5, and/or is greater than 0.05, preferably greater than 0.1 and in particular greater than 0.2.

3. The chamfering tool according to claim 1 or 2, wherein the tooth profile of the machining tooth flank side transitions into a convex shape towards the tooth tip.

4. The chamfering tool according to claim 3, wherein the angle of pressure of the tooth profile decreases on the machining tooth flank side between the tooth root and the transition into the convex region, with a relative change factor greater than 0.1, preferably greater than 1 and in particularly greater than 2 and/or smaller than 10.

5. The chamfering tool according to one of the preceding claims, the axial length (L) of which extends beyond a contact length of the machining engagement having at least two tool teeth, such that, in the event of a repositioning of the relative position of the tool and the workpiece that matches a displacement of the tool along its axis, other tool teeth can, at least in part, come into machining engagement with the workpiece.

6. The chamfering tool according to claim 5, wherein the axial length (L) of the chamfering tool extends at least 50%, and in particular at least 100% beyond the contact length.

7. A chamfering system (100) comprising two or more chamfering tools according to one of the preceding claims, wherein a first chamfering tool (4a) is designed for single-flank chamfering of the tooth edges on the left flanks of the tool toothing and a second, in particular differently formed chamfering tool (4b) is designed for single-flank chamfering of the tooth edges on the right flanks of the workpiece toothing.

8. The chamfering system according to claim 7, wherein a tool head (80; 80') bearing one or more chamfering tools (4a, 4b; 4c, 4d) and designed for driving the same in rotation can be moved with respect to the workpiece axis of rotation (C) in at least one, preferably two and in particular three linearly independent spatial axes (X, Y, Z) and can be pivoted for an angle of inclination (η) of the tool axis with respect to the workpiece axis, wherein a pivot device causing this pivotability (A) is directly carried by a slide, in particular by a radial slide (74) setting the axial spacing between the axes, and this slide is carried by a slide arrangement (70, 72) causing the remaining movements of the spatial axes.

9. The chamfering system according to claim 8, wherein the pivot device allows pivoting by +/-120 or more, in particular by +/-160° or more.

10. The chamfering system according to one of claims 7 to 9, wherein one or more fly cutters (14) are provided as a further chamfering tool, which fly cutters are also still arranged in the same tool head (80'), and wherein the chamfering system is controlled to chamfer in a first operating mode using the chamfering tools designed according to one of claims 1 to 6 and to chamfer using at least one fly cutter chamfering tool in a second operating mode.

11. The chamfering system according to one of claims 7 to 10, comprising an assembly unit formed from at least two of the chamfering tools and having a common axis of rotation for the tools, by means of which assembly unit a relative axial position and/or a relative rotational position with respect to the common axis of rotation is established by being defined between each predetermined reference tooth of the chamfering tools.

12. A gear cutting machine comprising a main machining station for producing a workpiece toothing by chip-removal machining, and comprising a chamfering system (100) equipped with a chamfering tool according to one of claims 1 to 6 and/or a chamfering system according to one of claims 7 to 10.

13. A method for producing a chamfer on the tooth edges of a tooth flank side of a workpiece toothing using a chamfering tool according to one of claims 1 to 6 by carrying out a single-flank machining process.

14. The method according to claim 13, wherein the tooth edges are chamfered on both tooth flank sides of an end face of the workpiece toothing using a chamfering system (100) according to one of claims 7 to 10 by carrying out two single-flank machining processes.

15. The method according to one of claims 13 and 14, where in a workpiece toothing is chamfered by a first tool region as viewed with respect to the axial length (L) of the chamfering tool, and another workpiece toothing of the same type is chamfered by a second tool region having, at least partially, different tool teeth.

16. The method according to one of claims 13 to 15, wherein the workpiece toothings are helically toothed, and the chamfering tools for chamfering the pointed edge and the blunt edge of the helical toothing operate in different pivot positions of the tool axis of rotation with respect to the workpiece axis of rotation, wherein, in relation to the orthogonal position of the axes of rotation (B, C) as viewed in the direction of the axial spacing, work on the pointed side is preferably carried out at a pivot angle (η) in the amount of less than 10°, in particular less than 5°, and/or work on the blunt side is carried out at a pivot angle (η) in the amount of preferably greater than 5° and in particular greater than 10°, and preferably less than 35° and in particular less than 30°.

17. The method according to claims 13 to 16, wherein when chamfering the blunt side, work is carried out further off-centre, as viewed tangentially, than when chamfering the pointed side, in particular with an outward offset of at least 5 mm and preferably an outward offset at least 10 mm.

## Revendications

1. Outil de chanfreinage (4) destiné à chanfreiner des dentures de pièce à usiner (22) et comportant une denture hélicoïdale qui présente, par filet, plusieurs dents (5) à tranchant doté d'une géométrie déterminée et qui présente un profil de dent (8, 9 ; 8', 9') asymétrique, vu selon une couple axiale de l'outil, conçu pour un usinage sur un flanc selon un engrènement d'usinage par génération avec la denture de pièce à usiner (22),
**caractérisé en ce que** le rapport de la longueur axiale (a_{p/1}) du côté du profil de dent ne servant pas à l'usinage à la longueur axiale (a_{p/2}) du côté d'usinage, qui est majoritairement concave, est inférieur à 0,8.

2. Outil de chanfreinage selon la revendication 1, dans lequel le rapport de la longueur axiale (a_{p/1}) du côté de flanc de dent du profil de dent ne servant pas à l'usinage à la longueur axiale (a_{p/2}) du côté d'usinage est inférieur à 0,7, de préférence inférieur à 0,6, notamment inférieur à 0,5, et/ou supérieur à 0,05, de préférence supérieur à 0,1, notamment supérieur à 0,2.

3. Outil de chanfreinage selon la revendication 1 ou 2, dans lequel le profil de dent du côté de flanc de dent d'usinage passe à une forme convexe vers la tête de la dent.

4. Outil de chanfreinage selon la revendication 3, dans lequel l'angle de pression du profil de dent diminue, sur le côté de flanc de dent d'usinage, entre le pied de la dent et le passage à la zone convexe, avec un facteur de changement relatif supérieur à 0,1, de préférence supérieur à 1, notamment supérieur à 2 et/ou inférieur à 10.

5. Outil de chanfreinage selon l'une quelconque des revendications précédentes, dont la longueur axiale (L) dépasse une longueur de contact de l'engrènement d'usinage comprenant au moins deux dents d'outil, si bien que, lors d'un repositionnement de la position relative de l'outil et de la pièce à usiner correspondant à un décalage de l'outil le long de son axe, d'autres dents d'outil peuvent venir, au moins en partie, en engrènement d'usinage avec la pièce.

6. Outil de chanfreinage selon la revendication 5, dans lequel la longueur axiale (L) de l'outil de chanfreinage dépasse d'au moins 50 %, notamment d'au moins 100 % la longueur de contact.

7. Système de chanfreinage (100) composé d'au moins deux outils de chanfreinage selon l'une quelconque des revendications précédentes, dans lequel un premier outil de chanfreinage (4a) est conçu pour le chanfreinage sur un flanc des arêtes de dent sur les flancs gauches de la denture d'outil et un deuxième outil de chanfreinage (4b), notamment de configuration différente, est conçu pour le chanfreinage sur un flanc des arêtes de dent sur les flancs droits de la denture de pièce à usiner.

8. Système de chanfreinage selon la revendication 7, dans lequel une tête d'outil (80 ; 80') portant un ou plusieurs outils de chanfreinage (4a, 4b ; 4c, 4d) et conçue pour les entraîner en rotation est déplaçable par rapport à l'axe de rotation (C) de la pièce à usiner_selon au moins un, de préférence au moins deux, notamment trois axes spatiaux (X, Y, Z) linéairement indépendants et peut subir un pivotement pour un angle d'inclinaison (η) de l'axe d'outil par rapport à l'axe de pièce à usiner, un dispositif de pivotement occasionnant cette aptitude au pivotement (A) étant porté directement par un chariot, notamment un chariot radial (74) qui règle l'écart existant entre les axes, et ce chariot étant porté par un dispositif à chariot (70, 72) occasionnant les mouvements d'axes spatiaux restants.

9. Système de chanfreinage selon la revendication 8, dans lequel le dispositif de pivotement permet un pivotement de +/-120° ou plus, notamment de +/-160° ou plus.

10. Système de chanfreinage selon l'une des revendications 7 à 9, dans lequel un ou plusieurs fly cutters (14) sont prévus comme autres outils de chanfreinage, lesquels sont notamment disposés également dans la même tête d'outil (80'), le système de chanfreinage étant commandé selon un premier mode d'exploitation pour effectuer un chanfreinage avec les outils de chanfreinage conçus selon l'une des revendications 1 à 6 et selon un deuxième mode d'exploitation, pour effectuer un chanfreinage avec au moins un outil de chanfreinage de type fly cutter.

11. Système de chanfreinage selon l'une des revendications 7 à 10, comportant une unité de montage formée d'au moins deux des outils de chanfreinage et présentant un axe de rotation commun pour les outils, grâce à laquelle une position axiale relative et/ou une position de rotation relative par rapport à l'axe de rotation commun est établie en étant définie entre une dent de référence respective prédéterminée des outils de chanfreinage.

12. Machine à tailler les dentures comportant un poste d'usinage principal permettant de produire une denture de pièce à usiner par usinage par enlèvement de matière et comportant un système de chanfreinage (100) doté d'un outil de chanfreinage selon l'une des revendications 1 à 6 et/ou d'un système de chanfreinage selon l'une des revendications 7 à 10.

13. Procédé de production d'un chanfrein sur les arêtes de dent d'un côté de flanc de dent d'une denture de pièce à usiner à l'aide d'un outil de chanfreinage selon l'une des revendications 1 à 6, avec réalisation d'un usinage sur un flanc.

14. Procédé selon la revendication 13, dans lequel les arêtes de dent sur les deux côtés de flanc de dent d'une face frontale de la denture de pièce à usiner sont chanfreinées à l'aide d'un système de chanfreinage (100) selon l'une des revendications 7 à 10, par réalisation de deux usinages sur un flanc.

15. Procédé selon l'une des revendications 13 et 14, dans lequel une denture de pièce à usiner est chanfreinée par une première zone d'outil, vue par rapport à la longueur axiale (L) de l'outil de chanfreinage, et une autre denture de pièce à usiner du même type est chanfreinée par une deuxième zone d'outil présentant, au moins en partie, d'autres dents d'outil.

16. Procédé selon l'une des revendications 13 à 15, dans lequel les dentures de pièce à usiner sont obliques, et les outils de chanfreinage servant au chanfreinage des arêtes pointues et mousses de la denture oblique se produit selon des positions de pivotement différentes de l'axe de rotation d'outil par rapport à l'axe de rotation de la pièce à usiner, étant entendu que, par rapport à la position orthogonale, vue dans le sens de l'espacement axial, des axes de rotation (B, C), on procède, sur le côté pointu, de préférence selon un angle de pivotement (η) d'une valeur inférieure à 10°, notamment inférieure à 5° et/ou on procède sur le côté mousse selon un angle de pivotement (η) d'une valeur qui est de préférence supérieure à 5°, notamment supérieure à 10° et de préférence inférieure à 35°, notamment inférieure à 30°.

17. Procédé selon l'une des revendications 13 à 16, dans lequel, lors du chanfreinage du côté mousse, on procède, vu de manière tangentielle, de façon plus excentrée que lors du chanfreinage du côté pointu, notamment avec un décalage vers l'extérieur d'au moins 5 mm, de préférence d'au moins 10 mm.
